# EUROPEAN PATENT APPLICATION

(11) **EP 4 007 316 A1**
(43) Date of publication of application: **01.06.2022**
(21) Application number: 20869568.4
(22) Date of filing: 31.07.2020
(51) Int. Cl.: H04W 4/14

(54) **SHORT MESSAGE SERVICE PROCESSING SYSTEM AND METHOD, DEVICE, AND COMPUTER READABLE STORAGE MEDIUM**

(30) Priority: 29.09.2019 CN 201910936427
(71) Applicant: ZTE Corporation, Shenzhen, Guangdong 518057 (CN)
(72) Inventor: ZHANG, Lei, Nanjing, Jiangsu 210012 (CN)
(74) Representative: Raynor, Simon Mark
(86) International application number: PCT/CN2020/106453
(87) International publication number: WO 2021/057261

(57) **Abstract**

Embodiments of the present disclosure provide a short message service processing system, which is configured to, with a short message interworking device, perform a signaling conversion in a first short message process between a short message service center and a mobility management entity or a short message service function entity; where the signaling conversion in the first short message process is a conversion from first signaling of an E interface to second signaling of a SGd interface; the short message interworking device is further configured to perform a signaling conversion in a second short message process between the short message service center and a unified data management entity/home subscriber server; and the signaling conversion in the second short message process is a conversion from first signaling of a C interface to second signaling of a S6c interface.

## Description

### CROSS REFERENCE TO RELATED APPLICATIONS

The present application is filed based on Chinese Patent Application No. 201910936427.5 filed on September 29, 2019, and claims priority to this Chinese Patent Application, which is incorporated by reference herein in its entirety.

### TECHNICAL FIELD

Embodiments of the present disclosure relate to but not limited to the field of mobile communications, in particular, to but not limited to a short message service processing system, a method, a device and a computer readable storage medium.

### BACKGROUND

Mobile communication has been developing for more than 30 years. Most domestic and foreign operators operate and maintain 2/3/4G multiple types of networks at the same time and have started the construction of 5G networks. The simultaneous maintenance and operation of the multiple types of networks brings heavy cost pressure to the operators. In a condition that 5G construction has been started and 4G coverage has been basically completed, it has become the optimal choice for the operators to gradually decommission 2/3G networks. According to a prediction of the Global System for Mobile Communications assembly (GSMA), 4G will be the mainstream in the next 10 years, and 5G will focus on hotspot coverage.

Due to the characteristics of binding with subscriber identity module (SIM) card, a short message is safer than an over the top (OTT) message. At the same time, due to the convenience that terminals support for short message formats, the short message is more accessible than a rich communication suite (RCS) instant message (IM). In the evolution of mobile networks from 2G to 4G, "Internet of Humans" short message has always been an important service for the operators. In the 5G era of the Internet of Everything, new application scenarios of "Internet of Things" short message are added.
(1) Over-the-air (OTA): The dynamic download, deletion and update of the service menu of a 5G terminal is realized through the short message, so that a terminal can obtain customized information services;
(2) IP session wake-up: In order to meet a low power consumption requirement of some 5G terminals in a machine type communication (MTC) scenario, the terminal may usually be in a "sleep" state, and an IP session of the terminal may be activated by an application trigger short message on a network side when necessary.

The 5G short message network evolution solution in related technologies lies in: for the "Internet of Humans" scenario, an IP short message solution based on an internet protocol short message gateway (IP-SM-GW) is adopted, and for the "Internet of Things" scenario, a short message solution based on a non-access stratum (NAS) of a short message service function (SMSF) entity is adopted. The IP short message solution is a short message solution introduced with the IP multimedia subsystem (IMS) in the 4G era, and has some usage restrictions. Firstly, it is required for the terminal to support a session initiation protocol (SIP) and to register an IMS domain. And the IP-SM-GW provides a domain selection function to switch between a circuit switched (CS) domain, a packet switched (PS) domain or the IMS domain, which complicates a short message process. Secondly, it cannot meet the low power consumption requirement of a "Internet of Things" terminal, while the low power consumption requirement is more and more prominent in the massive machine type communication (mMTC) scenario, as one of three major scenarios in the 5G era. Therefore, the 5G core network in related technologies still needs to construct a service management sub-function (SMSF) entity to provide short message services for the "Internet of Things" terminal with low power consumption. This combined solution requires for constructions of the IP-SM-GW as well as the SMSF, thereby network construction cost and network complexity is increased.

### SUMMARY

Embodiments of the present disclosure provide a short message service processing system, a method, a device, and a computer storage medium.

Some embodiments of the present disclosure provide a short message service processing system, including:
- a short message interworking device, configured to perform a signaling conversion in a first short message process between a short message service center and a mobility management entity or a short message service function entity; where the signaling conversion in the first short message process is a conversion from a first signaling of an E interface to a second signaling of a SGd interface;
- the short message interworking device is further configured to perform a signaling conversion in a second short message process between the short message service center and a unified data management entity/home subscriber server; wherein the signaling conversion in the second short message process is a conversion from the first signaling of a C interface to the second signaling of a S6c interface.

Some embodiments of the present disclosure further provide a short message service processing method, including:
- performing a signaling conversion in a first short message process between a short message service center and a mobility management entity or a short message service function entity; where the signaling conversion in the first short message process is a conversion from a first signaling of an E interface to a second signaling of a SGd interface; and
- performing a signaling conversion in a second short message process between the short message service center and a unified data management entity/home subscriber server; where the signaling conversion in the second short message process is a conversion from the first signaling of a C interface to the second signaling of a S6c interface.

Some embodiments of the present disclosure further provide a short message interworking device, including a processor, a memory, and a communication bus, where:
- the communication bus is used to realize connection and communication between the processor and the memory;
- the processor is configured to execute one or more computer programs stored in the memory to implement the following operations:
- performing a signaling conversion in a first short message process between a short message service center and a mobility management entity or a short message service function entity; where the signaling conversion in the first short message process is a conversion from a first signaling of an E interface to a second signaling of a SGd interface;
- performing a signaling conversion in a second short message process between the short message service center and a unified data management entity/home subscriber server; where the signaling conversion in the second short message process is a conversion from the first signaling of a C interface to the second signaling of a S6c interface; and
- performing a signaling conversion in a third short message process between the mobility management entity and the unified data management entity/home subscriber server; wherein the signaling conversion in the third short message process is a conversion from the second signaling of a S6a interface to the first signaling of a D interface.

Some embodiments of the present disclosure further provide a computer-readable storage medium, where the computer-readable storage medium stores one or more computer programs, and the one or more computer programs is executable by one or more processors to implement the following operations:
- performing a signaling conversion in a first short message process between a short message service center and a mobility management entity or a short message service function entity; where the signaling conversion in the first short message process is a conversion from a first signaling of an E interface to a second signaling of a SGd interface;
- performing a signaling conversion in a second short message process between the short message service center and a unified data management entity/home subscriber server; where the signaling conversion in the second short message process is a conversion from the first signaling of a C interface to the second signaling of a S6c interface; and
- performing a signaling conversion in a third short message process between the mobility management entity and the unified data management entity/home subscriber server; where the signaling conversion in the third short message process is a conversion from the second signaling of a S6a interface to the first signaling of a D interface.

### BRIEF DESCRIPTION OF THE DRAWINGS

FIG. 1 is a schematic structural diagram of a short message service processing system according to Embodiment 1 of the present disclosure;
FIG. 2 is a schematic structural diagram of a short message service processing system according to Embodiment 1 of the present disclosure;
FIG. 3 is a schematic diagram of a short message registration process in the system as shown in FIG. 1 according to Embodiment 1 of the present disclosure;
FIG. 4 is a schematic diagram of a location update process in the system as shown in FIG. 2 according to Embodiment 1 of the present disclosure;
FIG. 5 is a schematic diagram of processes of making a user re-reachable/making a memory re-available in the system as shown in FIG. 2 according to Embodiment 1 of the present disclosure;
FIG. 6 is a schematic diagram of a short message registration process in the system as shown in FIG. 2 according to Embodiment 1 of the present disclosure;
FIG. 7 is a schematic diagram of a short message origination process in the system as shown in FIG. 2 according to Embodiment 1 of the present disclosure;
FIG. 8 is a schematic diagram of another short message origination process in the system as shown in FIG. 2 according to Embodiment 1 of the present disclosure;
FIG. 9 is a schematic diagram of a short message termination process in the system as shown in FIG. 1 according to Embodiment 1 of the present disclosure;
FIG. 10 is a schematic diagram of a short message termination process in the system as shown in FIG. 2 according to Embodiment 1 of the present disclosure;
FIG. 11 is a schematic diagram of another short message termination process in the system as shown in FIG. 1 according to Embodiment 1 of the present disclosure;
FIG. 12 is a schematic diagram of yet another short message termination process in the system as shown in FIG. 2 according to Embodiment 1 of the present disclosure;
FIG. 13 is a schematic structural diagram of a short message service processing system according to Embodiment 2 of the present disclosure;
FIG. 14 is a schematic structural diagram of a short message service processing system according to Embodiment 2 of the present disclosure;
FIG. 15 is a flowchart of a part of operations of a short message service processing method according to Embodiment 3 of the present disclosure;
FIG. 16 is a flowchart of a part of operations of a short message service processing method according to Embodiment 3 of the present disclosure;
FIG. 17 is a flowchart of a part of operations of a short message service processing method according to Embodiment 3 of the present disclosure;
FIG. 18 is a schematic diagram of a short message interworking device according to Embodiment 4 of the present disclosure.

### DETAILED DESCRIPTION

In order to make the purpose, the technical solution, and the advantages of the present disclosure clearer, embodiments of the present disclosure will be explained in detail below through specific implementations with reference to the accompanying drawings. It should be understood that the specific embodiments described here are only used to explain the present disclosure, and are not used to limit the present disclosure.

### Embodiment 1:

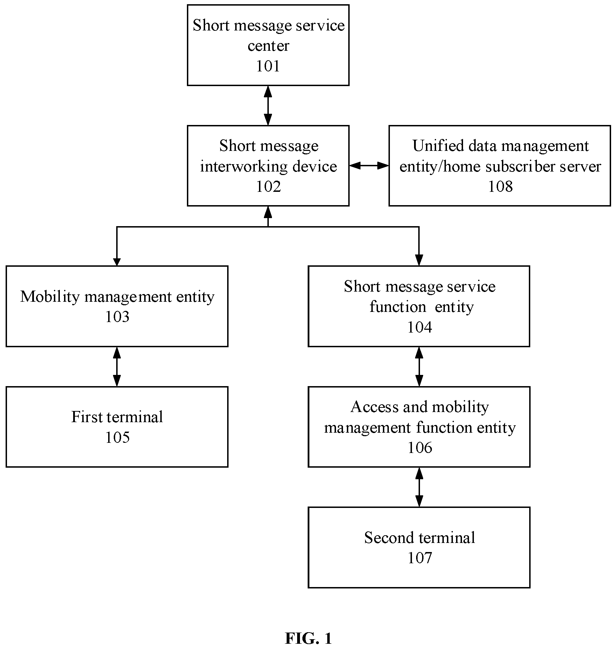

In order to solve the problems in related technologies that 5G short message service processing systems includes an IP-SM-GW, causing increased network complexity due to the introduction of IP short messages, and that a low power consumption requirement of terminals in an "Internet of Things" cannot be met, thereby both the IP-SM-GW and a SMSF have to be constructed, leading to high costs for network construction, some embodiments of the present disclosure provide a short message service processing system. Referring to FIG. 1, the short message service processing system includes a short message interworking device 102, configured to perform a signaling conversion in a first short message process between a short message service center 101 and a mobility management entity 103 or a short message service function entity 104. The signaling conversion in the first short message process is a conversion from a first signaling of an E interface to a second signaling of a SGD interface. The short message interworking device 102 is further configured to perform a signaling conversion in a second short message process between the short message service center 101 and a unified data management entity/home subscriber server 108. The signaling conversion in the second short message process is a conversion from the first signaling of a C interface to the second signaling of a S6c interface.

In some embodiments, the short message interworking device 102 is further configured to perform a signaling conversion in a third short message process between the mobility management entity 103 and the unified data management entity/home subscriber server 108. The signaling conversion in the third short message process is a conversion from the second signaling of a S6a interface to the first signaling of a D interface.

It should be noted that the short message service processing system in the embodiments of the present disclosure at least includes the following devices.

The short message service center (SMSC) 101, configured to implement storage, forwarding and retry functions of short messages of a terminal;
The mobility management entity (MME) 103, configured to implement functions such as mobility and access management of a first terminal 105, where the first terminal is a 4G terminal.

The short message service function (SMSF) entity 104, configured to realize a 5G short message service function, that is, to realize short message registration/deregistration function of a 5G terminal, as well as a forwarding function of origination/termination short messages.

The unified data management (UDM) entity/home subscriber server (HSS) 108, configured to realize a management and storage function of subscription data and/or authentication data of users of 4/5G terminals. It should be understood that the unified data management entity and the home subscriber server are deployed in an integrated manner to ensure the normal operation of the short message service processing system.

An access and mobility management function (AMF) entity 106, configured to realize a mobility and access management function of a second terminal 107, where the second terminal is a 5G terminal.

In some embodiments, the mobile management entity 103 is configured to provide a non-access stratum (NAS) based short message service to the first terminal 105. The access and mobility management function entity 106 is configured to provide the NAS-based short message service to the second terminal 107. In other words, unified NAS-based short message service is provided to 4/5G terminals through the MME and AMF entity on network-side, thereby providing mobile operators with a long-term 5G short message network evolution solution.

In some embodiments, the first short message process includes a short message origination and a short message termination. The second short message process includes: a short message center reminder, making a user re-accessibility, making a memory re-availability and a short message delivery report.

In some embodiments, the third short message process includes: a location update, a user short message service subscription, and a user short message service cancellation.

In some embodiments, the short message interworking device includes any one of the following.

The short message interworking device is a short message service gateway (SMS-GW) entity where the short message service gateway entity and the short message service center are in different physical devices.

The short message interworking device is an enhanced short message service center (eSMSC) where the enhanced short message service center includes the short message service gateway entity.

It should be understood that the enhanced short message service center refers to an enhanced short message center formed by integrating the short message service center with a preset short message interworking gateway function. That is, the enhanced short message center has a short message interworking function.

In some embodiments, the first signaling is a MAP signaling; and the second signaling is a Diameter signaling.

In order to better understand the present disclosure, specific connection manners and short message scenarios corresponding to the short message interworking device 102 will be described in detail below with reference to the accompanying drawings.

It should be noted that in related technologies, core networks provided by domestic and foreign operators supporting short message services all adopt a mobile application part (MAP) protocol, in which a signaling transfer point (STP) entity forwards a MAP signaling based on a signaling system 7 (SS7) or IP-based SS7. In the evolution to 5G networks, the STP entity that provide a signaling forwarding function for 2/3G will gradually be decommissioned. The embodiments of the present disclosure provide specific description for message processes after decommissioning the STP in the following scenarios.
Scenario 1: a short message scenario that a 4G terminal in a local network does not roam out of the local network, and the 4G terminal accesses a public land mobile network side using a Diameter protocol (originally as an improvement or replacement of a remote authentication dial in user service (radius) protocol, and is a new generation of AAA protocol (authentication, authorization, accounting)) .
Scenario 2: a short message scenario of a 4G terminal performing international roaming into the local network, home network side of the 4G terminal adopts the Diameter protocol;
Scenario 3: a short message scenario of a 4G terminal performing international roaming into the local network, home network side of the 4G terminal adopts the MAP protocol;
Scenario 4: a short message scenario that a 5G terminal in the local network does not roam out of the local network, and the 5G terminal accesses the public land mobile network side using the Diameter protocol;
Scenario 5: a short message scenario of a 5G terminal performing international roaming into the local network, and the 5G terminal accesses the public land mobile network side using the Diameter protocol;
Scenario 6: a short message scenario of a 5G terminal performing international roaming into the local network, home network side of the 5G terminal adopts the MAP protocol;
Scenario 7: a scenario that 4/5G terminals in the local network roam internationally to 4/5G networks provided by other operators.

Referring to FIG. 1, this embodiment provides a schematic structural diagram of a short message service processing system. In order to reduce rebuilding of the short message service center 101, the first short message center 101 adopts the MAP signaling to directly connect to the SMS-GW entity. In order to meet a short message service requirement of 4/5G terminals in the local network, the SMS-GW entity provides a conversion function between MAP signaling and Diameter signaling among SMSC 101, MME 103, SMSF 104 and UDM/HSS 108, which mainly includes the following signaling conversions.
(1) A signaling conversion in a first short message process among SMSC 101, MME 103, and SMSF 104, that is, a conversion from MAP signaling of an E interface to Diameter signaling of a SGD interface. Herein, the first short message process includes a short message origination (MO), a short message termination (MT), etc.

| **MAP signalling** | **Diameter signalling** |
|---|---|
| MAP- MO- FORWARD-SHORT- MESSAGE | MO-Forward-Short-Message-Request(OFR) |
| MAP-MO-FORWARD-SHORT-MESSAGE-ACK | MO-Forward-Short-Message-Answer (OFA) |
| MAP-MT-FORWARD-SHORT-MESSAGE | MT-Forward-Short-Message-Request (TFR) |
| MAP-MT-FORWARD-SHORT-MESSAGE-ACK | MT-Forward-Short-Message-Answer (TFA) |

(2) A signaling conversion in a second short message process between SMSC 101 and UDM/HSS 108, that is, a conversion from MAP signaling of a C interface to Diameter signaling of a S6c interface. Herein, the second short message process includes a short message center reminder, a notification that a user is re-reachable and a memory is re-available, and a short message delivery report, etc.

| **MAP signalling** | **Diameter signalling** |
|---|---|
| MAP-ALERT-SERVICE-CENTRE | Alert-Service-Centre-Request(ALR) |
| MAP-ALERT-SERVICE-CENTRE-ACK | Alert-Service-Centre-Answer (ALA) |
| MAP-READY-FOR-SM | Notify-Request(NOR) |
| MAP-READY-FOR-SM-ACK | Notify-Answer(NOA) |
| MAP-REPORT-SM-DELIVERY-STATUS | Report-SM-Delivery-Status-Request |
| MAP-REPORT-SM-DELIVERY-STATUS-ACK | Report-SM- Delivery-Status- Answer |

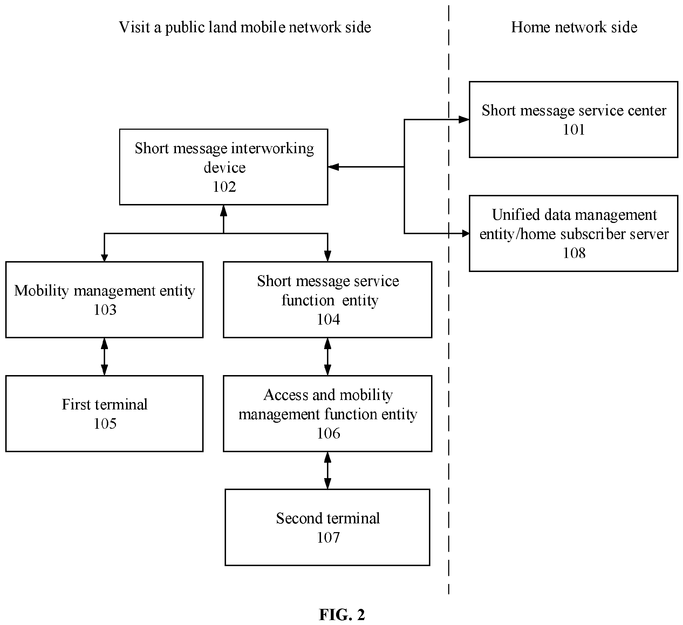

Optionally, referring to FIG. 2, the embodiments of the present disclosure also provide a schematic structural diagram of a short message service processing system. The short message interworking device 102 is a SMS-GW entity which is independently arranged. In order to reduce rebuilding of the short message service center 101, the short message service center 101 uses the MAP signaling to directly connect to the SMS-GW entity. In order to meet short message service requirements of users performing international roaming into the local network, the SMS-GW entity provides the conversion function between the MAP signaling and the Diameter signaling among SMSC 101, MME 103, SMSF 104 and UDM/HSS108, and also provides the conversion function between the Diameter signaling and the MAP signaling between MME 103 and UDM/HSS 108, to support the provision of short message service for 4G terminals, whose home network adopts the MAP protocol, performing international roaming into the local network. Herein, MME 103 receives short messages termination MT by registration of the SMS-GW entity with the home network of the terminal as a mobile switching center (MSC). The following signaling conversions are mainly included.
(1) The signaling conversion in the first short message process among SMSC 101, MME 103, and SMSF 104, that is, the conversion from the MAP signaling of the E interface to the Diameter signaling of the SGd interface. Herein, the first short message process includes the short message origination MO, and the short message termination MT, etc.

| **MAP signalling** | **Diameter signalling** |
|---|---|
| MAP- MO- FORWARD-SHORT- MESSAGE | MO-Forward-Short-Message-Request(OFR) |
| MAP-MO-FORWARD-SHORT-MESSAGE-ACK | MO-Forward-Short-Message-Answer (OFA) |
| MAP-MT-FORWARD-SHORT-MESSAGE | MT-Forward-Short-Message-Request (TFR) |
| MAP-MT-FORWARD-SHORT-MESSAGE-ACK | MT-Forward-Short-Message-Answer (TFA) |

(2) The signaling conversion in the second short message process between SMSC 101 and UDM/HSS 108, that is, the conversion from the MAP signaling of the C interface to the Diameter signaling of the S6c interface. Herein, the second short message process includes the short message center reminder, the notification that the user is re-reachable and the memory is re-available, and the short message delivery report, etc..

| **MAP signalling** | **Diameter signalling** |
|---|---|
| MAP-ALERT-SERVICE-CENTRE | Alert-Service-Centre-Request(ALR) |
| MAP-ALERT-SERVICE-CENTRE-ACK | Alert-Service-Centre-Answer(ALA) |
| MAP-READY-FOR-SM | Notify-Request(NOR) |
| MAP-READY-FOR-SM-ACK | Notify-Answer(NOA) |
| MAP-REPORT-SM-DELIVERY-STATUS | Report-SM-Delivery-Status-Request |
| MAP-REPORT-SM-DELIVERY- STATUS-ACK | Report-SM- Delivery-Status- Answer |

(3) A signaling conversion in a third short message process between MME 103 and UDM/HSS 108, that is, a conversion from Diameter signaling of a S6a interface to MAP signaling of a D interface. Herein, the third short message process includes a location update, and a user short message service subscription/cancellation, etc.

| **MAP signalling** | **Diameter signalling** |
|---|---|
| MAP_UPDATE_LOCATION_req | Update-Location-Request (ULR) |
| MAP_UPDATE_LOCATION_rsp | Insert-Subscriber-Data-Request (IDR) |
| MAP_INSERT_SUBSCRIBER_DATA_req | Insert-Subscriber-Data-Request (IDR) |
| MAP_INSERT_SUBSCRIBER_DATA_rsp | Insert-Subscriber-Data-Answer (IDA) |
| MAP_CANCEL_LOCATION_req | Cancel-Location-Request (CLR) |
| MAP_CANCEL_rsp | Cancel-Location-Request (CLR) |
| MAP_SEND_AUTHENTICATION_INFO_req | Authentication-Information-Request (AIR) |
| MAP_SEND_AUTHENTICATION_INFO_rsp | Authentication-Information-Answer (AIA) |
| MAP_DELETE_SUBSCRIBER_DATA_req | Delete-Subscriber-Data-Request (DSR) |
| MAP_DELETE_SUBSCRIBER_DATA_rsp | Delete-Subscriber-Data-Answer (DSA) |
| MAP_PURGE_MS_req | Purge-UE-Request (PUR) |
| MAP_PURGE_MSrsp | Purge-UE-Request (PUR) |
| MAP_RESET_req | Reset-Request (RSR) |
| MAP_RESET_rsp | Reset-Answer (RSA) |
| MAP-READY-FOR-SM | Notify-Request (NOR) |
| MAP-READY-FOR-SM-ACK | Notify-Answer (NOA) |

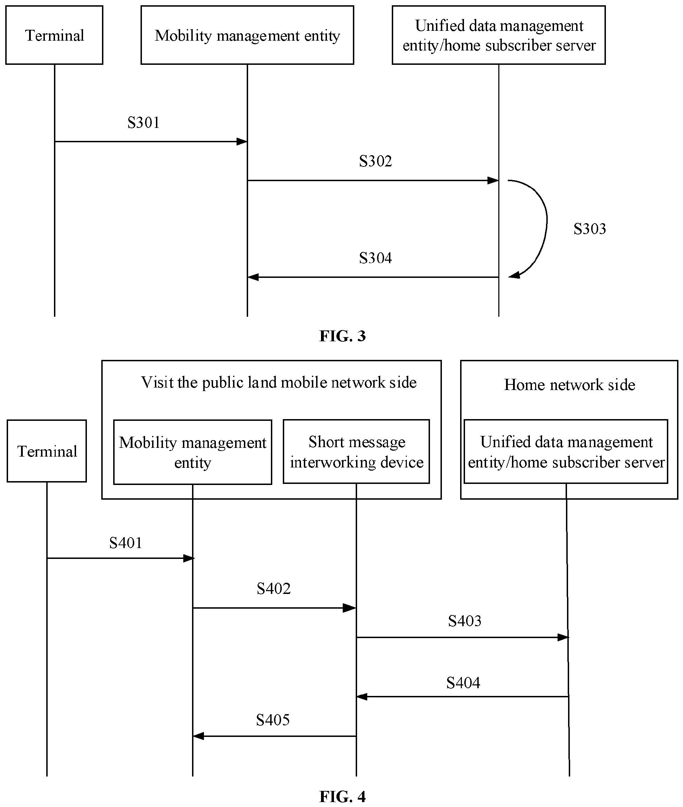

Referring to FIG. 3, the embodiments of the present disclosure provide a schematic diagram of a short message registration process in the system as shown in FIG. 1, which mainly includes the following operations.

In S301, the terminal initiates an attachment or location update to the MME

In S302, the MME initiates a location update request to the HSS, and carries an indication "SMS in MME required". At this time, the MME supports a NAS-based short message.

In S303, the HSS performs an MME short message registration.

In S304, the HSS returns a location update response to the MME

It is understandable that FIG. 3 may be a schematic diagram of a NAS-based short message registration process for 4G terminals in a local network, or may a schematic diagram of the NAS-based short message registration process when the 4G terminals in the local network roam internationally to a 4G network, provided by foreign operators, supporting the NAS-based short message.

Referring to FIG. 4, the embodiments of the present disclosure provide a schematic diagram of a location update process in the system as shown in FIG. 2. FIG. 4 may be a schematic diagram of the location update process of a 4G terminal performing international roaming into the local network, and a home network side of the 4G terminal uses the MAP protocol. The location update process mainly includes the following operations.

In S401, the terminal initiates an attachment request or a location update request of an evolved packet system (EPS) to the MME

In S402, the MME initiates a Diameter location update request to the SMS-GW entity, where signaling corresponding to the Diameter location update request is Update-Location-Request.

In S403, the SMS-GW entity converts the Diameter location update request signaling Update-Location-Request to a MAP location update request signaling MAP-UPDATE-LOCATION, and forwards the MAP location update request signaling to the UDM/HSS.

In S404, the UDM/HSS returns a MAP location update response signaling to the SMS-GW entity.

In S405, the SMS-GW entity returns a Diameter location update answer signaling Update-Location-Answer to the MME

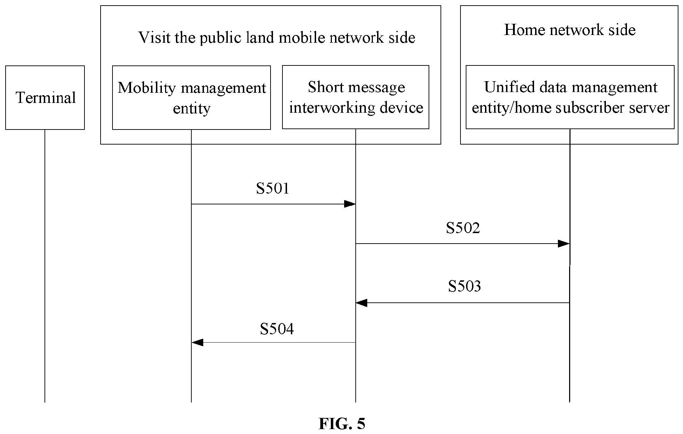

Referring to FIG. 5, the embodiments of the present disclosure provide a schematic diagram of a process of user being re-reachable/memory being re-available in the system as shown in FIG. 2. FIG. 5 may be a schematic diagram of a process of a 4G terminal being re-reachable/memory of the 4G terminal being re-available, where the 4G terminal performs international roaming into the local network, and the home network side of the 4G terminal uses the MAP protocol. The process mainly includes the following operations.

In S501, in response to the terminal being re-reachable or the memory of the terminal being re-available, the MME initiates Diameter notification request signaling Notify-Request to the SMS-GW entity.

In S502, the SMS-GW entity converts the Diameter notification request signaling to MAP notification request signaling MAP-READY-FOR-SM, and forwards the MAP notification request signaling to the UDM/HSS.

In S503, the UDM/HSS returns MAP notification request answer signaling MAP--READY-FOR-SM to the SMS-GW entity.

In S504, the SMS-GW entity returns Diameter notification answer signaling Notify-Answer to the MME

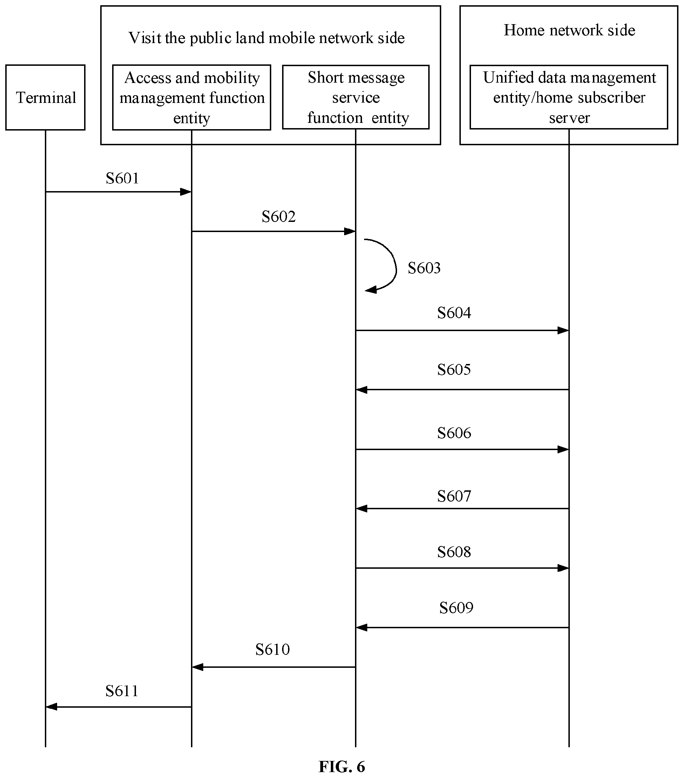

Referring to FIG. 6, the embodiments of the present disclosure provide a schematic diagram of a short message registration process in the system as shown in FIG. 2. FIG. 6 may be a schematic diagram of a NAS-based short message registration process for 5G terminals being in local network or performing international roaming. The NAS-based short message registration process mainly includes the following operations.

In S601, the terminal initiates a registration request to the AMF entity, the registration request contains an identifier "SMS supported" , which indicates that the NAS-based short message is supported;
In S602, the AMF entity selects the SMSF for the terminal, and calls a service interface Nsmsf_SMService_Activate to activate the short message service.

In S603, the SMSF performs UDM discovery by configuring or querying a communication chip (NRF).

In S604, in response to the SMSF already containing terminal context, the SMSF replaces an existing AMF address with a new AMF address.

In S605, in response to the SMSF not containing the terminal context, the SMSF uses Nudm_UECM_Registration to register with the UDM.

In S606, the SMSF sends Nudm_SDM_Get to the UDM.

In S607, the UDM responds Nudm_SDM_Get Response to the SMSF, and then the SMSF acquires SMS management and subscription data from the UDM.

In S608, the SMSF sends udm_SDM_Subscribe to the UDM.

In S609, the UDM responds udm_SDM_Subscribe Response to the SMSF, and the SMSF acquires a notification of modification of SMS management and subscription data on the UDM side.

In S610, the SMSF returns a short message service activation response Nsmsf_SMService_Activate_Response to the AMF entity.

In S611, the AMF entity returns a registration response to the user equipment (UE).

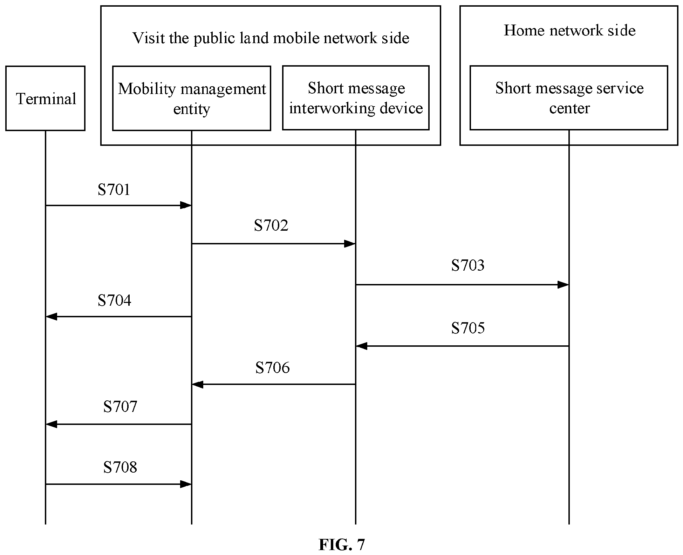

Referring to FIG. 7, the embodiments of the present disclosure provide a schematic diagram of a short message origination process in the system as shown in FIG. 2. FIG. 7 may be a schematic diagram of a NAS-based short message origination process, where the NAS-based short message is sent by a 4G terminal, and the 4G terminal is in the local network or performs international roaming into the local network. The NAS-based short message origination process mainly includes the following operations.

In S701, after establishing a radio resource control (RRC) protocol and connecting with the MME, the terminal encapsulates the short message in a NAS-based message and submits the NAS-based message to the MME through signaling Uplink NAS (SMS body) transport.

In S702, the MME submits the short message to the SMS-GW entity through Diameter signaling MO-Forward-Short-Message-Request.

In S703, the SMS-GW entity converts the Diameter signaling MO-Forward-Short-Message-Request to MAP-MO-FORWARD-SHORT-MESSAGE, and submits it to the SMSC on the home network side.

In S704, the MME returns a control protocol (CP) layer response to the terminal through signaling Downlink NAS (CP ack) transport.

In S705, the SMSC returns MAP signaling MAP-MO-FORWARD-SHORT-MESSAGE-ACK to the MME

In S706, the SMS-GW converts the MAP signaling MAP-MO-FORWARD-SHORT-MESSAGE-ACK into Diameter signaling MO-Forward-Short-Message-Answer, and forwards the Diameter signaling to the terminal.

In S707, the MME encapsulates a short message response in the NAS-based message, and forwards the NAS-based message to the terminal through signaling Downlink NAS (Submit Report) transport.

In S708, a UE sends the CP layer response to the MME through signaling Uplink NAS (CP ack) transport.

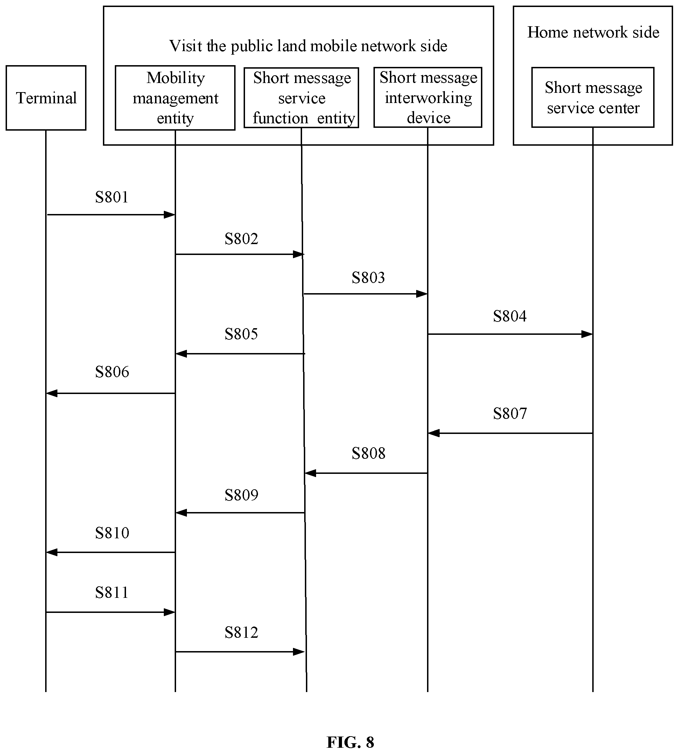

Referring to FIG. 8, the embodiments of the present disclosure provide a schematic diagram of another short message origination process in the system as shown in FIG. 2. FIG. 8 may be a schematic diagram of a NAS-based short message origination process, where the NAS-based short message is sent by a 5G terminal, and the 5G terminal is in the local network or performs international roaming into the local network. The NAS-based short message origination process mainly includes the following operations.

In S801, after establishing a RRC connection with the AMF entity, the UE encapsulates the short message in the NAS-based message and submits it to the AMF entity through the signaling Uplink NAS (SMS body) transport.

In S802, the AMF entity submits the short message to the SMSF through a service interface Nsmsf_SMService_UplinkSMS (SMS body).

In S803, the SMSF submits the short message to the SMS-GW entity through the Diameter signaling MO-Forward-Short-Message-Request.

In S804, the SMS-GW entity converts a Diameter short message origination signaling to MAP signaling MAP_MO_FORWARD_SM and submits the MAP signaling to the user's home SMSC.

In S805, the SMSF returns the CP layer response to the AMF entity through a service interface Namf_Communication_NlN2MessageTransfer (CP ack).

In S806, the AMF entity returns the CP layer response to the UE through the signaling Downlink NAS (CP ack) transport.

In S807, the SMSC returns MAP signaling MAP-MO-FORWARD-SHORT-MESSAGE-ACK.

In S808, the SMS-GW entity converts the MAP signaling MAP-MO-FORWARD-SHORT-MESSAGE-ACK to a Diameter response MO-Forward-Short-Message-Answer and forwards the Diameter response to the SMSF.

In S809, the SMSF returns a response to the AMF entity through a service interface Namf_Communication_NlN2MessageTransfer (Submit Report).

In S810, the AMF entity encapsulates the short message response in the NAS-based message and forwards the NAS-based message to the terminal through the signaling Downlink NAS (Submit Report) transport.

In S811, the UE sends the CP layer response to the AMF entity through the signaling Uplink NAS (CP ack) transport.

In S812, the AMF entity returns the CP layer response to the SMSF through a service interface Nsmsf_SMService_UplinkSMS (CP ack).

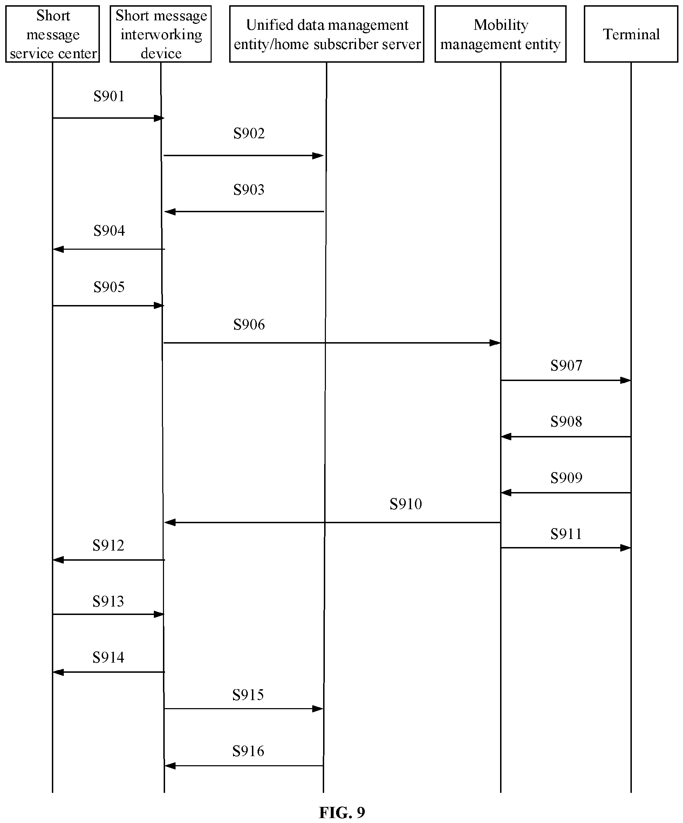

Referring to FIG. 9, the embodiments of the present disclosure provide a schematic diagram of a short message termination process in the system as shown in FIG. 1. FIG. 9 may be a schematic diagram of a NAS-based short message termination process, where the NAS-based short message is received by a 4G terminal, and the 4G terminal is in the local network without roaming or performs roaming to an operator whose MME supports the NAS-based short message. The NAS-based short message termination process mainly includes the following operations.

In S901, the SMSC initiates a MAP routing query request to the SMS-GW entity, where signaling corresponding to the MAP routing query request is MAP-SEND-ROUTING-INFO-FOR-SM.

In S902, the SMS-GW entity converts the MAP routing query signaling into Diameter routing query signaling Send-Routing-Info-for-SM-Request and forwards the Diameter routing query signaling to the HSS.

In S903, the HSS returns Diameter routing query answer signaling Send-Routing-info-for-SM-Answer to the SMS-GW entity.

In S904, the SMS-GW entity converts the Diameter routing query answer signaling into MAP routing query answer signaling MAP-SEND-ROUTING-INFO-FOR-SM-ACK and returns the MAP routing query answer signaling to the SMSC.

In S905, the SMSC delivers MAP short message delivery signaling MAP-MT-Forward-SM to the SMS-GW entity.

In S906, the SMS-GW entity converts the MAP signaling MAP-MT-Forward-SM into Diameter signaling MT-Forward-Short-Message-Request, and sends the Diameter signaling to the MME

In S907, after establishing the RRC connection with the terminal, the MME sends the short message to the terminal through signaling Downlink NAS (SMS body) transport.

In S908, the terminal returns the CP layer response to the MME through the signaling Uplink NAS (CP ack) transport.

In S909, the terminal returns a short message delivery report to the MME through signaling Uplink NAS (Delivery Rpt) transport.

In S910, the MME returns Diameter short message delivery answer signaling MT-Forward-Short-Message-Answer to the SMS-GW entity.

In S911, the MME returns the CP layer response to the terminal through the signaling Downlink NAS (CP Ack) transport.

In S912, the SMS-GW entity converts the Diameter short message delivery answer signaling to MAP short message delivery answer signaling MAP-MT-FORWARD-SHORT-MESSAGE-ACK, and returns the MAP short message delivery answer signaling to the SMSC.

In S913, the SMSC generates MAP delivery status report signaling MAP-REPORT-SM-DELIVERY-STATUS, and sends the MAP delivery status report signaling to the SMS-GW entity.

In S914, the SMS-GW entity returns the MAP delivery status report answer signaling MAP-REPORT-SM-DELIVERY-STATUS-ACK to the SMSC.

In S915, the SMS-GW entity converts the MAP delivery status report signaling into a Diameter delivery status report signaling Report-SM-Delivery-Status-Request, and sends the Diameter delivery status report signaling to the HSS.

In S916, the HSS returns a Diameter answer Report-SM-Delivery-Status-Answer.

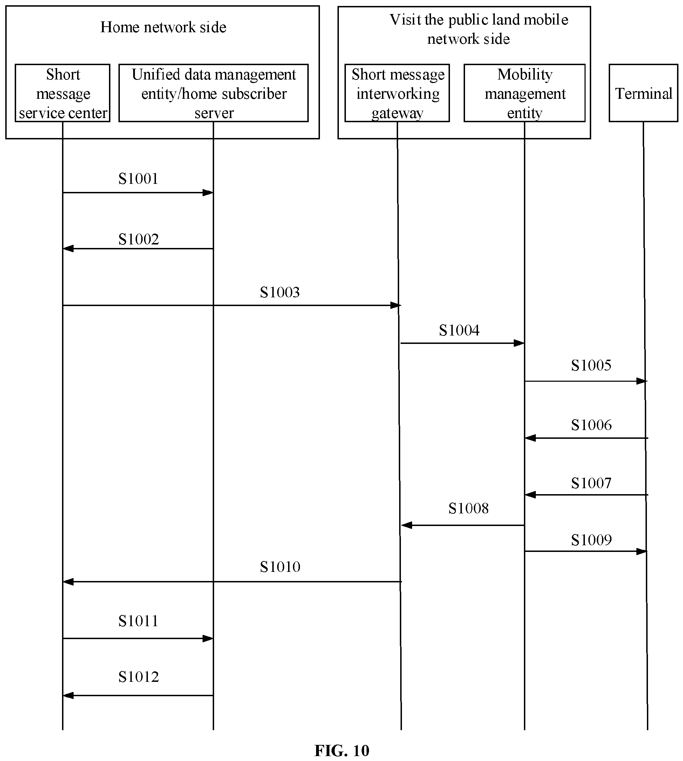

Referring to FIG. 10, the embodiments of the present disclosure provide a schematic diagram of a short message termination process in the system as shown in FIG. 2. FIG. 10 may be a schematic diagram of a NAS-based short message termination process, where the NAS-based short message is received by a 4G terminal, the 4G terminal performs international roaming into the local network, and the home network side of the 4G terminal adopts the MAP protocols. The NAS-based short message termination process mainly includes the following operations.

In S1001, the SMSC initiates MAP routing query request signaling MAP-SEND-ROUTING-INFO-FOR-SM to the UDM/HSS.

In S1002, the UDM/HSS returns MAP routing answer signaling MAP-SEND-ROUTING-INFO-FOR- SM-ACK to the SMSC.

In S1003, the SMSC sends MAP short message delivery signaling MAP-MT-Forward-SM to the SMS-GW entity.

In S1004, the SMS-GW entity converts the MAP short message delivery signaling into a Diameter short message delivery signaling MT-Forward-Short-Message-Request, and sends the Diameter short message delivery signaling to the MME

In S1005, after establishing the RRC connection with the terminal, the MME sends the short message to the terminal through the signaling Downlink NAS (SMS body) transport.

In S1006, the terminal returns the CP layer response through the signaling Uplink NAS (CP ack) transport.

In S1007, the terminal returns the short message delivery report through the signaling Uplink NAS (Delivery Rpt) transport.

In S1008, the MME returns the Diameter short message delivery answer signaling MT-Forward- Short-Message-Answer to the SMS-GW entity.

In S1009, the MME returns the CP layer response to the terminal through the signaling Downlink NAS (CP Ack) transport.

In S1010, the SMS-GW entity converts the Diameter short message delivery answer signaling to the MAP short message delivery answer signaling MAP-MT-FORWARD-SHORT-MESSAGE-ACK, and returns the MAP short message delivery answer signaling to the SMSC.

In S1011, the SMSC generates the MAP delivery status report signaling MAP-REPORT-SM-DELIVERY-STATUS and sends the MAP delivery status report signaling to the UDM/HSS.

In S1012, the UDM/HSS returns the MAP delivery status report answer signaling MAP-REPORT-SM-DELIVERY-STATUS-ACK to the SMSC.

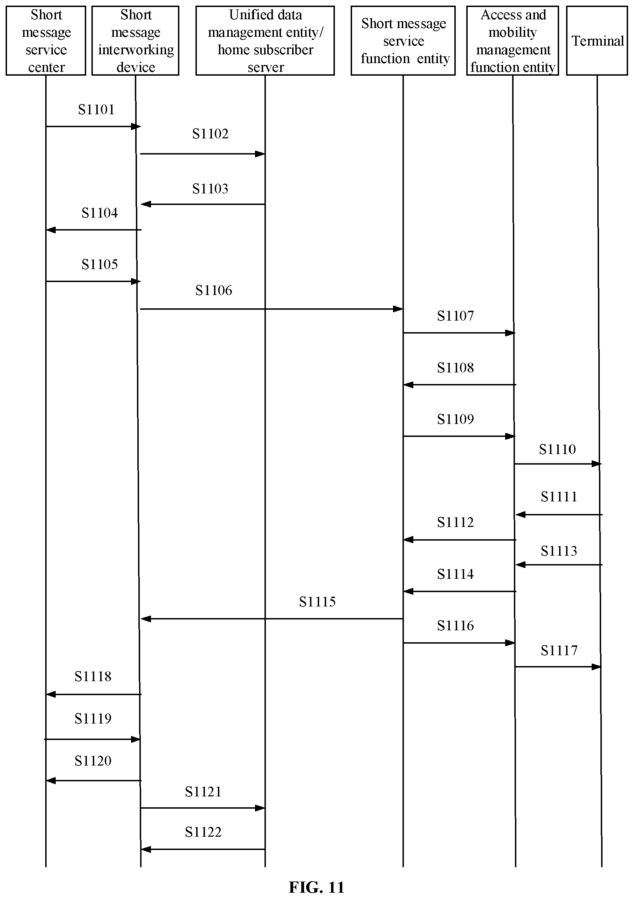

Referring to FIG. 11, the embodiments of the present disclosure provide a schematic diagram of another short message termination process in the system as shown in FIG. 1. FIG. 11 may be a schematic diagram of a NAS-based short message termination process, the NAS-based short message is received by a 5G terminal being in the local network. The NAS-based short message termination process mainly includes the following operations.

In S1101, the SMSC initiates the MAP routing query request to the SMS-GW entity, where signaling corresponding to the MAP routing query request is MAP-SEND-ROUTING-INFO-FOR-SM.

In S1102, the SMS-GW entity converts the MAP routing query signaling into the Diameter routing query signaling Send-Routing-Info-for-SM-Request and forwards the Diameter routing query signaling to the UDM/HSS.

In S1103, the UDM/HSS returns Diameter routing query answer signaling Send-Routing-info-for-SM-Answer to the SMS-GW entity.

In S1104, the SMS-GW entity converts the Diameter routing query answer signaling into the MAP routing query answer signaling MAP-SEND-ROUTING-INFO-FOR-SM-ACK, and returns the MAP routing query answer signaling to the SMSC.

In S1105, the SMSC sends the MAP short message delivery signaling MAP-MT-Forward-SM to the SMS-GW entity.

In S1106, the SMS-GW entity converts the MAP short message delivery signaling to the Diameter short message delivery signaling MT-Forward-Short-Message-Request and sends the Diameter short message delivery signaling to the SMSF.

In S1107, the SMSF enables the AMF entity to establish a RRC connection with the terminal through a service interface Namf_MT_EnableUEReachability Request.

In S1108, the AMF entity returns a response to the SMSF through the service interface Namf_MT_EnableUEReachability Response.

In S1109, the SMSF sends the short message to the AMF entity through a service interface Namf_Communication_NlN2MessageTransfer (SMS body).

In S1110, the AMF entity sends the short message to the terminal through the signaling Downlink NAS (SMS body) transport.

In S1111, the terminal returns the CP layer response through the signaling Uplink NAS (CP ack) transport.

In S1112, the AMF entity returns the CP layer response to the SMSF through a service interface Nsmsf_SMService_UplinkSMS (CP Ack).

In S1113, the terminal returns the short message delivery report through the signaling Uplink NAS (Delivery Rpt) transport.

In S1114, the AMF entity returns the delivery report to the SMSF through a service interface Namf_Communication_NlN2MessageTransfer (Delivery Report).

In S1115, the SMSF returns Diameter short message delivery answer signaling MT-Forward-Short-Message-Answer.

In S1116, the SMSF returns the CP layer response through a service interface Namf_Communication_NlN2MessageTransfer (CP Ack).

In S1117, the AMF entity returns the CP layer response to the terminal through the signaling Downlink NAS (CP Ack) transport.

In S1118, the SMS-GW entity converts the Diameter short message delivery answer signaling to the MAP MT short message delivery answer signaling MAP-MT-FORWARD-SHORT-MESSAGE-ACK, and returns the MAP MT short message delivery answer signaling to the SMSC.

In S1119, the SMSC generates the MAP delivery status report signaling MAP-REPORT-SM-DELIVERY-STATUS and sends the MAP delivery status report signaling to the SMS-GW entity.

In S1120, the SMS-GW entity responds the delivery status report answer signaling MAP-REPORT-SM-DELIVERY-STATUS-ACK to the SMSC.

In S1121, the SMS-GW entity converts the MAP delivery status report signaling to the Diameter delivery status report signaling Report-SM-Delivery-Status-Request and sends the Diameter delivery status report signaling to the HSS.

In S1122, the UDM/HSS returns Diameter answer signaling Report-SM-Delivery-Status-Answer to the SMS-GW entity.

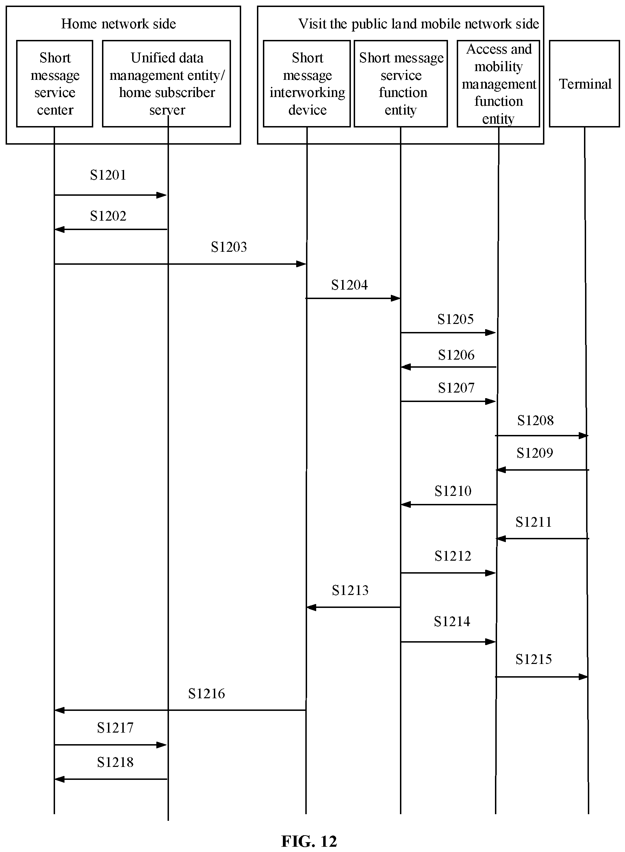

Referring to FIG. 12, the embodiments of the present disclosure provide a schematic diagram of another short message termination process in the system as shown in FIG. 2. FIG. 12 may be a schematic diagram of a NAS-based short message termination process, where the NAS-based short message is received by a 5G terminal, the 5G terminal performs international roaming into the local network, and the home network side of the 5G terminal adopts the MAP protocols. The NAS-based short message termination process mainly includes the following operations.

In S1201, the SMSC initiates the MAP routing query request to the UDM/HSS, where signaling corresponding to the MAP routing query request is MAP-SEND-ROUTING-INFO-FOR-SM.

In S1202, the UDM/HSS responds the MAP routing query answer signaling MAP-SEND-ROUTING-INFO-FOR-SM-ACK to the SMSC.

In S1203, the SMSC sends the MAP short message delivery signaling MAP-MT-Forward-SM to the SMS-GW entity.

In S1204, the SMS-GW entity converts the MAP short message delivery signaling to the Diameter short message delivery signaling MT-Forward-Short-Message-Request and sends the Diameter short message delivery signaling to the SMSF.

In S1205, the SMSF enables the AMF entity to establish the RRC connection with the terminal through the service interface Namf_MT_EnableUEReachability Request.

In S1206, the AMF entity returns a response to the SMSF through the service interface Namf_MT_EnableUEReachability Response.

In S1207, the SMSF sends the short message to the AMF entity through the service interface Namf_Communication_NlN2MessageTransfer (SMS body).

In S1208, the AMF entity sends the short message to the terminal through the signaling Downlink NAS (SMS body) transport.

In S1209, the terminal returns the CP layer response through the signaling Uplink NAS (CP ack) transport.

In S1210, the AMF entity returns the CP layer response to the SMSF through the service interface Nsmsf_SMService_UplinkSMS (CP Ack).

In S1211, the terminal returns the short message delivery report through the signaling Uplink NAS (Delivery Rpt) transport.

In S1212, the AMF entity returns the delivery report to the SMSF through the service interface Namf_Communication_NlN2MessageTransfer (Delivery Report).

In S1213, the SMSF returns Diameter short message delivery answer signaling MT-Forward-Short- Message-Answer.

In S1214, the SMSF returns the CP layer response through the service interface Namf_Communication_NlN2MessageTransfer (CP Ack).

In S1215, the AMF entity returns the CP layer response to the terminal through the signaling Downlink NAS (CP Ack) transport.

In S1216, the SMS-GW entity converts the Diameter short message delivery answer signaling to the MAP MT short message delivery answer signaling MAP-MT-FORWARD-SHORT-MESSAGE-ACK, and returns the MAP MT short message delivery answer signaling to the SMSC.

In S1217, the SMSC generates the MAP delivery status report signaling MAP-REPORT-SM-DELIVERY-STATUS and sends the MAP delivery status report signaling to the SMS-GW entity.

In S1218, the SMS-GW entity responds the delivery status report answer signaling MAP-REPORT-SM-DELIVERY-STATUS-ACK to the SMSC.

The short message service processing system according to the embodiments of the present disclosure includes a short message interworking device, the short message interworking device is configured to perform the signaling conversion in the first short message process between the short message service center and the mobility management entity or the short message service function entity. The signaling conversion in the first short message process is the conversion from the first signaling of the E interface to the second signaling of the SGD interface. The short message interworking device is further configured to perform the signaling conversion in the second short message process between the short message service center and the unified data management entity/home subscriber server. The signaling conversion in the second short message process is the conversion from the first signaling of the C interface to the second signaling of the S6c interface. The short message interworking device is further configured to perform the signaling conversion in the third short message process between the mobility management entity and the unified data management entity/home subscriber server. The signaling conversion in the third short message process is the conversion from the second signaling of the S6a interface to the first signaling of the D interface. In some implementations, it can be implemented, including but not limited to, that the signaling conversion between the first signaling and the second signaling among the short message service center, the mobility management entity, the short message service function entity, the unified data management entity/home subscriber server by the short message interworking device. In this way, low network construction cost and a simple short message process can be achieved, and the low power consumption requirement of terminal in the "Internet of Things" can be satisfied.

### Embodiment 2:

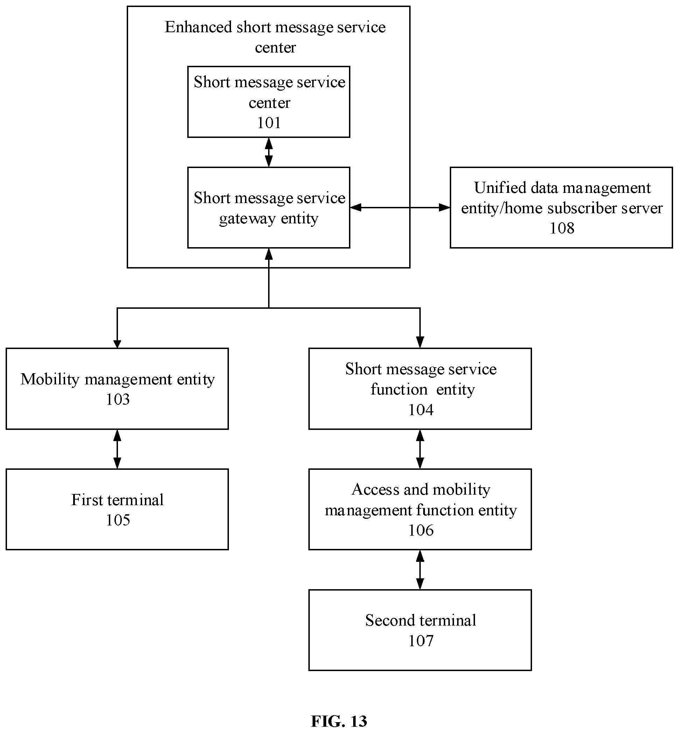

In order to solve the problems in related technologies that 5G short message service processing systems includes an IP-SM-GW, causing increased network complexity due to the introduction of IP short messages, and that a low power consumption requirement of terminals in an "Internet of Things" cannot be met, thereby both the IP-SM-GW and a SMSF have to be constructed, leading to high costs for network construction, some embodiments of the present disclosure provide a short message service processing system, referring to FIG. 13. In order to reduce rebuilding of network, a short message interworking gateway function is realized by rebuilding a short message center in a local network. That is, an enhanced short message service center (eSMSC) is provided as an enhanced short message center that incorporates the short message interworking gateway function. In order to meet the short message service requirements of 4/5G terminals in the local network, in addition to a standard short message center function, the eSMSC further provides a signaling conversion function between SMSC 101 and MME 103 from an E interface to a SGd interface, as well as the signaling conversion function between SMSC 101 and UDM/HSS 108 from a C interface to a S6c interface. The signaling conversions mainly include the following conversions.
(1) A signaling conversion in a first short message process among SMSC 101, MME 103, and SMSF 104, that is, a conversion from MAP signaling of an E interface to Diameter signaling of a SGd interface. Herein, the first short message process includes a short message origination (MO) and a short message termination (MT), etc.

| **MAP signalling** | **Diameter signalling** |
|---|---|
| MAP- MO- FORWARD-SHORT- MESSAGE | MO-Forward-Short-Message-Request(OFR) |
| MAP-MO-FORWARD-SHORT-MESSAGE-ACK | MO-Forward-Short-Message-Answer (OFA) |
| MAP-MT-FORWARD-SHORT-MESSAGE | MT-Forward-Short-Message-Request (TFR) |
| MAP-MT-FORWARD-SHORT-MESSAGE-ACK | MT-Forward-Short-Message-Answer (TFA) |

(2) A signaling conversion in a second short message process between SMSC 101 and UDM/HSS 108, that is, a conversion from MAP signaling of a C interface to Diameter signaling of a S6c interface. Herein, the second short message process includes a short message center reminder, a notification that a user is re-reachable, a memory is re-available and a short message delivery report, etc.

| **MAP signalling** | **Diameter signalling** |
|---|---|
| MAP- ALERT-SERVICE-CENTRE | Alert-Service-Centre-Request(ALR) |
| MAP-ALERT-SERVICE-CENTRE-ACK | Alert-Service-Centre-Answer(ALA) |
| MAP-READY-FOR-SM | Notify-Request(NOR) |
| MAP-READY-FOR-SM-ACK | Notify-Answer(NOA) |
| MAP-REPORT-SM-DELIVERY-STATUS | Report-SM-Delivery-Status-Request |
| MAP-REPORT-SM-DELIVERY-STATUS-ACK | Report-SM- Delivery-Status- Answer |

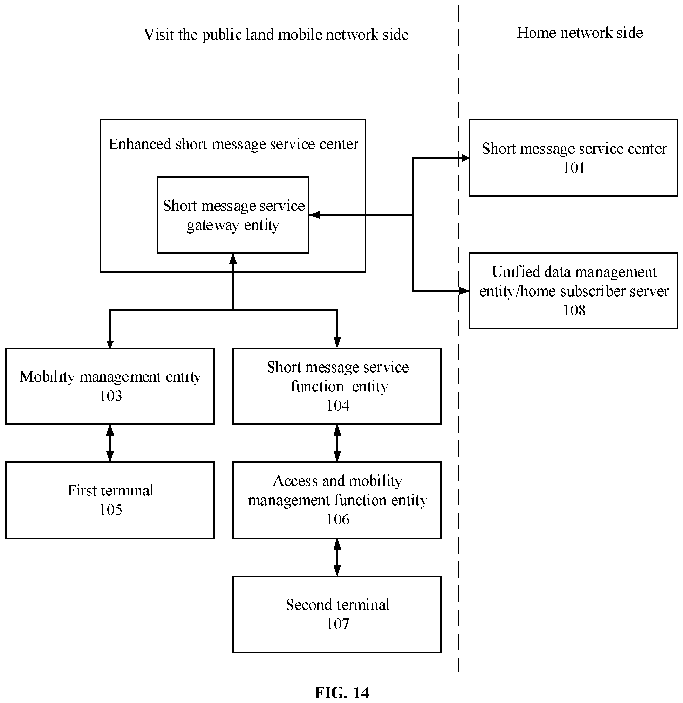

Optionally, referring to FIG. 14, the embodiments also provide a schematic structural diagram of a short message service processing system. In order to reduce rebuilding of the network, the short message interworking gateway function is realized by rebuilding the short message center in the local network. That is, the eSMSC is provided as an enhanced short message center that incorporates the short message interworking gateway function. In addition to the standard short message center function, the eSMSC further provides the conversion function between SMSC 101 and MME 103 from the E interface to the SGd interface, and the conversion function between SMSC 101 and HSS from the C interface to the S6c interface. To meet the short message service requirements of users performing international roaming into the local network and to support a MME short message, a SMS-GW entity also supports the conversion function between MME 103 and HSS from the S6a interface to the D interface, in order to provide the short message service for a 4G terminal performing international roaming into the local network, where a home network of the 4G terminal adopts a MAP protocol. The conversions mainly includes the following conversions.
(1) The signaling conversion in the first short message process among SMSC 101, MME 103, and SMSF 104, that is, the conversion from the MAP signaling of the E interface to the Diameter signaling of the SGd interface. Herein, the first short message process includes the short message origination MO, and the short message termination MT, etc.

| **MAP signalling** | **Diameter signalling** |
|---|---|
| MAP- MO- FORWARD-SHORT- MESSAGE | MO-Forward-Short-Message-Request(OFR) |
| MAP-MO-FORWARD-SHORT-MESSAGE-ACK | MO-Forward-Short-Message-Answer (OFA) |
| MAP-MT-FORWARD-SHORT-MESSAGE | MT-Forward-Short-Message-Request (TFR) |
| MAP-MT-FORWARD-SHORT-MESSAGE-ACK | MT-Forward-Short-Message-Answer (TFA) |

(2) The signaling conversion in the second short message process between SMSC 101 and UDM/HSS 108, that is, the conversion from the MAP signaling of the C interface to the Diameter signaling of the S6c interface. Herein, the second short message process includes the short message center reminder, the notification that the user is re-reachable and the memory is re-available, and the short message delivery report, etc.

| **MAP signalling** | **Diameter signalling** |
|---|---|
| MAP-ALERT-SERVICE-CENTRE | Alert-Service-Centre-Request(ALR) |
| MAP-ALERT-SERVICE-CENTRE-ACK | Alert-Service-Centre-Answer(ALA) |
| MAP-READY-FOR-SM | Notify-Request(NOR) |
| MAP-READY-FOR-SM-ACK | Notify-Answer(NOA) |
| MAP-REPORT-SM-DELIVERY-STATUS | Report-SM-Delivery-Status-Request |
| MAP-REPORT-SM-DELIVERY- STATUS-ACK | Report-SM- Delivery-Status- Answer |

(3) A signaling conversion in a third short message process between MME 103 and UDM/HSS 108, that is, a conversion from Diameter signaling of a S6a interface to MAP signaling of a D interface. Herein, the third short message process includes a location update, and a user short message service subscription/cancellation, etc.

| **MAP signalling** | **Diameter signalling** |
|---|---|
| MAP_UPDATE_LOCATION_req | Update-Location-Request (ULR) |
| MAP_UPDATE_LOCATION_rsp | Insert-Subscriber-Data-Request (IDR) |
| MAP_INSERT_SUBSCRIBER_DATA_req | Insert-Subscriber-Data-Request (IDR) |
| MAP_INSERT_SUBSCRIBER_DATA_rsp | Insert-Subscriber-Data-Answer (IDA) |
| MAP_CANCEL_LOCATION_req | Cancel-Location-Request (CLR) |
| MAP_CANCEL_LOCATION_rsp | Cancel-Location-Request (CLR) |
| MAP_SEND_AUTHENTICATION_INFO_req | Authentication-Information-Request (AIR) |
| MAP_SEND_AUTHENTICATION_INFO_rsp | Authentication-Information-Answer (AIA) |
| MAP_DELETE_SUBSCRIBER_DATA_req | Delete-Subscriber-Data-Request (DSR) |
| MAP_DELETE_SUBSCRIBER_DATA_rsp | Delete-Subscriber-Data-Answer (DSA) |
| MAP_PURGE_MS_req | Purge-UE-Request (PUR) |
| MAP_PURGE_MS_rsp | Purge-UE-Request (PUR) |
| MAP RESET req | Reset-Request (RSR) |
| MAP RESET rsp | Reset-Answer (RSA) |
| MAP-READY-FOR-SM | Notify-Request (NOR) |
| MAP-READY-FOR-SM-ACK | Notify-Answer (NOA) |

The short message service processing system according to the embodiments of the present disclosure realize the protocol conversion between the MAP signaling and Diameter signaling for the short message by pre-setting the enhanced short message service center incorporating the short message interworking function in the short message center. In this way, low network construction cost and simple short message process is achieved, and the low power consumption requirement of terminals in the "Internet of Things" is satisfied.

### Embodiment 3:

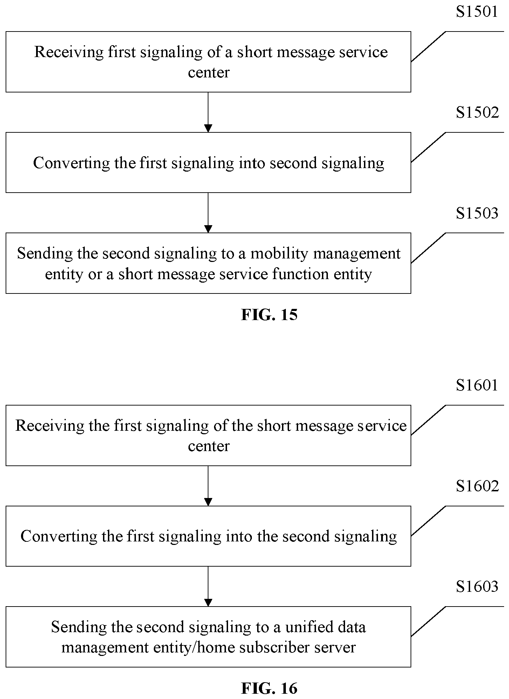

In order to solve the problems in related technologies that 5G short message service processing systems includes an IP-SM-GW, causing increased network complexity due to the introduction of IP short messages, and that a low power consumption requirement of terminals in an "Internet of Things" cannot be met, thereby both the IP-SM-GW and a SMSF have to be constructed, leading to high costs for network construction, some embodiments of the present disclosure provide a short message service processing method, referring to FIG. 15. The short message service processing method includes the following operations.

In S1501, first signaling of a short message service center is received.

In S1502, the first signaling is converted into a second signaling.

In S1503, the second signaling is sent to a mobility management entity or a short message service function entity.

It should be understood that a short message interworking device performs a signaling conversion in a first short message process between the short message service center and the mobility management entity or the short message service function entity. The signaling conversion in the first short message process is a conversion from first signaling of an E interface to second signaling of a SGd interface. Herein, the first signaling is MAP signaling; the second signaling is Diameter signaling; and the first short message process includes a short message origination (MO), and a short message termination (MT), etc.

| **MAP signalling** | **Diameter signalling** |
|---|---|
| MAP- MO- FORWARD-SHORT- MESSAGE | MO-Forward-Short-Message-Request(OFR) |
| MAP-MO-FORWARD-SHORT-MESSAGE-ACK | MO-Forward-Short-Message-Answer (OFA) |
| MAP-MT-FORWARD-SHORT-MESSAGE | MT-Forward-Short-Message-Request (TFR) |
| MAP-MT-FORWARD-SHORT-MESSAGE-ACK | MT-Forward-Short-Message-Answer (TFA) |

In some embodiments, referring to FIG. 16, the short message service processing method further includes the following operations.

In S1601, the first signaling of the short message service center is received.

In S1602, the first signaling is converted into the second signaling.

In S1603, the second signaling is sent to a unified data management entity/home subscriber server.

It should be understood that the short message interworking device performs a signaling conversion in a second short message process between the short message service center and the unified data management entity/home subscriber server. The signaling conversion in the second short message process is a conversion from first signaling of a C interface to second signaling of a S6c interface. Herein, the first signaling is the MAP signaling; the second signaling is the Diameter signaling; and the second short message process includes a short message center reminder, a notification that a user is re-reachable and a memory is re-available, and a short message delivery report, etc.

| **MAP signalling** | **Diameter signalling** |
|---|---|
| MAP-ALERT-SERVICE-CENTRE | Alert-Service-Centre-Request(ALR) |
| MAP-ALERT- SERVICE-CENTRE-ACK | Alert-Service-Centre-Answer (ALA) |
| MAP-READY-FOR-SM | Notify-Request(NOR) |
| MAP-READY-FOR-SM-ACK | Notify-Answer(NOA) |
| MAP-REPORT-SM-DELIVERY-STATUS | Report-SM-Delivery-Status-Request |
| MAP-REPORT-SM-DELIVERY-STATUS-ACK | Report-SM- Delivery-Status- Answer |

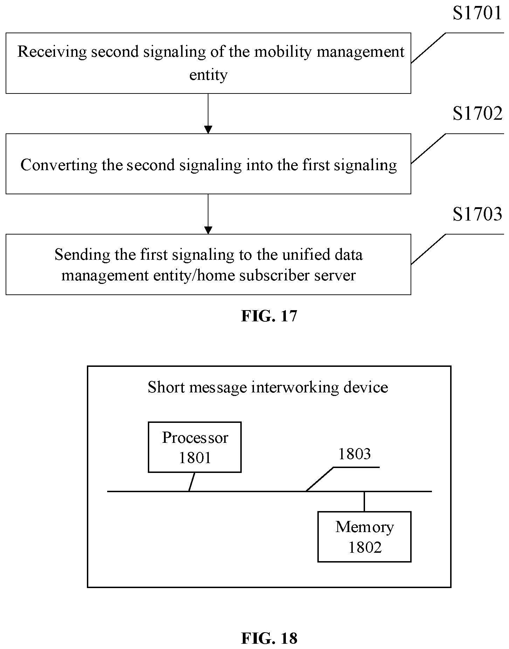

In some embodiments, referring to FIG. 17, the short message service processing method includes the following operations.

In S1701, second signaling of the mobility management entity is received.

In S1702, the second signaling is converted into the first signaling.

In S1703, the first signaling is sent to the unified data management entity/home subscriber server.

It should be understood that the short message interworking device performs a signaling conversion in a third short message process between the mobility management entity and the unified data management entity/home subscriber server. The signaling conversion in the third short message process is a conversion from second signaling of a S6a interface to first signaling of a D interface. Herein, the first signaling is the MAP signaling; the second signaling is the Diameter signaling; and the third short message process includes a location update, a user short message service subscription/cancellation, etc.

| **MAP signalling** | **Diameter signalling** |
|---|---|
| MAP_UPDATE_LOCATION_req | Update-Location-Request (ULR) |
| MAP_UPDATE_LOCATION_rsp | Insert-Subscriber-Data-Request (IDR) |
| MAP_INSERT_SUBSCRIBER_DATAreq | Insert-Subscriber-Data-Request (IDR) |
| MAP_INSERT_SUBSCRIBER_DATArsp | Insert-Subscriber-Data-Answer (IDA) |
| MAP_CANCEL_LOCATION_req | Cancel-Location-Request (CLR) |
| MAP_CANCEL_LOCATION_rsp | Cancel-Location-Request (CLR) |
| MAP_SEND_AUTHENTICATION_INFO_req | Authentication-Information-Request (AIR) |
| MAP_SEND_AUTHENTICATION_INFO_rsp | Authentication-Information-Answer (AIA) |
| MAP_DELETE_SUBSCRIBER_DATA_req | Delete-Subscriber-Data-Request (DSR) |
| MAP_DELETE_SUBSCRIBER_DATA_rsp | Delete-Subscriber-Data-Answer (DSA) |
| MAP_PURGE_MS_req | Purge-UE-Request (PUR) |
| MAP_PURGE_MS_rsp | Purge-UE-Request (PUR) |
| MAP RESET req | Reset-Request (RSR) |
| MAP RESET rsp | Reset-Answer (RSA) |
| MAP-READY-FOR-SM | Notify-Request (NOR) |
| MAP-READY-FOR-SM-ACK | Notify-Answer (NOA) |

In some embodiments, the short message interworking device includes any one of the following.

The short message interworking device is a short message service gateway (SMS-GW) entity. The short message service gateway entity and the short message service center are in different physical devices.

The short message interworking device is an enhanced short message service center (eSMSC). The enhanced short message service center includes the short message service gateway entity.

It should be understood that the enhanced short message service center refers to an enhanced short message center formed by integrating the short message service center with a preset the short message interworking gateway function, that is, an enhanced short message center with a short message interworking function.

The short message service processing method according to the embodiments of the present disclosure realizes protocol conversion between the MAP signaling and the Diameter signaling for the short messages by the short message interworking device. In this way, low network construction cost and simple short message process is achieve, and the low power consumption requirement of terminals in the "Internet of Things" can be satisfied.

### Embodiment 4:

This embodiment provides a short message interworking device. As shown in FIG. 18, the short message interworking device includes a processor 1801, a memory 1802, and a communication bus 1803.

Herein, the communication bus 1803 is used to implement connection and communication between the processor 1801 and the memory 1802.

The processor 1801 is configured to execute one or more computer programs stored in the memory 1802 to implement the following operations:
- performing a signaling conversion in a first short message process between a short message service center and a mobility management entity or a short message service function entity; wherein the signaling conversion in the first short message process is a conversion from first signaling of an E interface to second signaling of a SGd interface;
- performing a signaling conversion in a second short message process between the short message service center and a unified data management entity/home subscriber server; wherein the signaling conversion in the second short message process is a conversion from the first signaling of a C interface to the second signaling of a S6c interface;
- performing a signaling conversion in a third short message process between the mobility management entity and the unified data management entity/home subscriber server; wherein the signaling conversion in the third short message process is a conversion from the second signaling of a S6a interface to the first signaling of a D interface.

This embodiment also provides a computer-readable storage medium which includes volatile or non-volatile, removable or non-removable medium used in any method or technology for storing information (such as computer-readable instructions, data structures, computer program modules, or other data). The computer-readable storage media include but are not limited to a random access memory (RAM), a read-only memory (ROM), an electrically erasable programmable read only memory (EEPROM), a flash memory or other storage technologies, a compact disc read-only memory (CD-ROM), a digital versatile disk (DVD) or other optical disk storage, a magnetic cassette, a magnetic tape, a magnetic disk storage or other magnetic storage devices, or any other medium used to store desired information and that may be accessed by a computer.

The computer-readable storage medium in this embodiment stores one or more computer programs, and the stored one or more computer programs is executable by a processor to implement the following operations:
- performing a signaling conversion in a first short message process between a short message service center and a mobility management entity or a short message service function entity; where the signaling conversion in the first short message process is a conversion from first signaling of an E interface to second signaling of a SGd interface;
- performing a signaling conversion in a second short message process between the short message service center and a unified data management entity/home subscriber server; where the signaling conversion in the second short message process is a conversion from the first signaling of a C interface to the second signaling of a S6c interface; and
- performing a signaling conversion in a third short message process between the mobility management entity and the unified data management entity/home subscriber server; where the signaling conversion in the third short message process is a conversion from the second signaling of a S6a interface to the first signaling of a D interface.

This embodiment also provides a computer program (or computer software). The computer program can be distributed on a computer-readable medium and executed by a computable device to implement the following operations:
- performing a signaling conversion in a first short message process between a short message service center and a mobility management entity or a short message service function entity; wherein the signaling conversion in the first short message process is a conversion from first signaling of an E interface to second signaling of a SGd interface;
- performing a signaling conversion in a second short message process between the short message service center and a unified data management entity/home subscriber server; wherein the signaling conversion in the second short message process is a conversion from the first signaling of a C interface to the second signaling of a S6c interface; and
- performing a signaling conversion in a third short message process between the mobility management entity and the unified data management entity/home subscriber server; wherein the signaling conversion in the third short message process is a conversion from the second signaling of a S6a interface to the first signaling of a D interface.

And in some cases, at least one of the operations shown or described may be executed in a different order from that described in the foregoing embodiment.

It should be understood that, in some cases, at least one of the operations shown or described may be executed in a different order from that described in the foregoing embodiment.

This embodiment also provides a computer program product, including a computer readable device, and the computer readable device stores the computer program as above-mentioned. The computer readable device in this embodiment may include the computer readable storage medium as above-mentioned.

It can be seen that those skilled in the art should understand that all or some of the operations, system, functional modules/units of the device in the methods disclosed above may be implemented as software (which may be implemented by computer program codes executable by a computing device), firmware, hardware, and appropriate combinations thereof. In a hardware implementation, the division between functional modules/units mentioned in the above description does not necessarily correspond to the division of physical components. For example, a physical component may have multiple functions, or a function or operation may be performed by several physical components cooperatively. Some or all of the components may be implemented as software executed by a processor, such as a digital signal processor or a microprocessor, or as hardware, or as an integrated circuit, such as an application specific integrated circuit.

In addition, as is well known to those of ordinary skill in the art, communication mediums usually include a computer-readable instruction, a data structure, a program module, or other data in a modulated data signal such as a carrier wave or other transmission mechanisms, and may include any information delivery medium. Therefore, the present disclosure is not limited to any specific combination of hardware and software.

The above content is a further detailed description of the embodiments of the present disclosure in combination with specific implementations, and it cannot be considered that the specific implementations of the present disclosure are limited to these descriptions. For those of ordinary skill in the technical field to which the present disclosure belongs, a number of simple deductions or substitutions can be made without departing from the concept of the present disclosure, and they should all be regarded as belonging to the protection scope of the present disclosure.

## Claims

1. A short message service processing system, comprising:
- a short message interworking device, configured to perform a signaling conversion in a first short message process between a short message service center and a mobility management entity or a short message service function entity; wherein the signaling conversion in the first short message process is a conversion from first signaling of an E interface to second signaling of a SGd interface;
- the short message interworking device is further configured to perform a signaling conversion in a second short message process between the short message service center and a unified data management entity/home subscriber server; wherein the signaling conversion in the second short message process is a conversion from first signaling of a C interface to second signaling of a S6c interface.

2. The short message service processing system according to claim 1, wherein:
- the short message interworking device is further configured to perform a signaling conversion in a third short message process between the mobility management entity and the unified data management entity/home subscriber server; wherein the signaling conversion in the third short message process is a conversion from second signaling of a S6a interface to first signaling of a D interface.

3. The short message service processing system according to claim 1 or 2, wherein:
- the mobility management entity is configured to provide a non-access stratum (NAS) based short message service to a first terminal;
- the short message service processing system further comprises: an access and mobility management function entity, configured to provide the NAS-based short message service to a second terminal.

4. The short message service processing system according to claim 3, wherein:
- the first short message process comprises: a short message origination and a short message termination;
- the second short message process comprises: a short message center reminder, a notification that a user is re-reachable and a memory is re-available, and a short message delivery report.

5. The short message service processing system according to claim 2, wherein the third short message process comprises:
- a location update, a user short message service subscription and a user short message service cancellation.

6. The short message service processing system according to claim 5, wherein the short message interworking device comprises any one of the following:
- the short message interworking device is a short message service gateway entity; wherein the short message service gateway entity and the short message service center are in different physical devices;
- the short message interworking device is an enhanced short message service center; wherein the enhanced short message service center comprises the short message service gateway entity.

7. The short message service processing system according to claim 6, wherein:
- the first signaling is Mobile Application Part (MAP) signaling; and the second signaling is Diameter signaling.

8. A short message service processing method, comprising:
- performing a signaling conversion in a first short message process between a short message service center and a mobility management entity or a short message service function entity; wherein the signaling conversion in the first short message process is a conversion from first signaling of an E interface to second signaling of a SGd interface; and
- performing a signaling conversion in a second short message process between the short message service center and a unified data management entity/home subscriber server; wherein the signaling conversion in the second short message process is a conversion from first signaling of a C interface to second signaling of a S6c interface.

9. The short message service processing method according to claim 8, wherein:
- performing a signaling conversion in a third short message process between the mobile management entity and the unified data management entity/home subscriber server; the signaling conversion in the third short message process is a conversion from second signaling of a S6a interface to first signaling of a D interface.

10. A short message interworking device, comprising a processor, a memory, and a communication bus, wherein:
- the communication bus is used to implement connection and communication between the processor and the memory;
- the processor is configured to execute one or more computer programs stored in the memory to implement the following operations:
- performing a signaling conversion in a first short message process between a short message service center and a mobility management entity or a short message service function entity; wherein the signaling conversion in the first short message process is a conversion from first signaling of an E interface to second signaling of a SGd interface; and
- performing a signaling conversion in a second short message process between the short message service center and a unified data management entity/home subscriber server; wherein the signaling conversion in the second short message process is a conversion from first signaling of a C interface to second signaling of a S6c interface.

11. The short message interworking device according to claim 10, wherein the processor is further configured to execute one or more computer programs stored in the memory to implement:
- performing a signaling conversion in a third short message process between the mobility management entity and the unified data management entity/home subscriber server; wherein the signaling conversion in the third short message process is a conversion from second signaling of a S6a interface to first signaling of a D interface.

12. A computer-readable storage medium, wherein the computer-readable storage medium stores one or more computer programs and the one or more computer programs is executable by one or more processors to implement the following operations:
- performing a signaling conversion in a first short message process between a short message service center and a mobility management entity or a short message service function entity; wherein the signaling conversion in the first short message process is a conversion from first signaling of an E interface to second signaling of a SGd interface;
- performing a signaling conversion in a second short message process between the short message service center and a unified data management entity/home subscriber server; wherein the signaling conversion in the second short message process is a conversion from first signaling of a C interface to second signaling of a S6c interface.

13. The computer-readable storage medium of claim 12, wherein the one or more computer programs is executable by one or more processors to implement:
- performing a signaling conversion in a third short message process between the mobility management entity and the unified data management entity/home subscriber server; wherein the signaling conversion in the third short message process is a conversion from second signaling of a S6a interface to first signaling of a D interface.
